Europäisches Patentamt

European Patent Office

Office européen des brevets

(19)

(11) Veröffentlichungsnummer **0 158 146**

**A2**

(12) # EUROPÄISCHE PATENTANMELDUNG

(21) Anmeldenummer: 85102919.9

(22) Anmeldetag: 14.03.85

(51) Int. Cl.⁴: **B 29 C 49/06**
**B 29 C 49/42**

(30) Priorität: 07.04.84 DE 3413201

(43) Veröffentlichungstag der Anmeldung:
16.10.85 Patentblatt 85/42

(84) Benannte Vertragsstaaten:
AT CH FR GB LI

(71) Anmelder: INTERMEDICAT GMBH
Gerliswilstrasse 74
CH-6020 Emmenbrücke(CH)

(72) Erfinder: Batra, Rames H.
Rhönstrasse 16
D-3508 Melsungen(DE)

(74) Vertreter: von Kreisler, Alek, Dipl.-Chem. et al,
Deichmannhaus am Hauptbahnhof
D-5000 Köln 1(DE)

(54) Spritzblasvorrichtung.

(57) Die Spritzblasvorrichtung weist zwei dicht nebeneinander angeordnete Spritzgießformen (12,13) auf, von denen jede mit einer außen angeordneten Blasform (14,15) zusammenwirkt. An einem Dornträger (11), der gegenüber den Formen verschiebbar ist, sind zwei Drehteller (17,18) angebracht, von denen jeder zwei Formdorne (19,20) trägt. Für jedes Paar aus Spritzgießform und Blasform ist ein Drehteller (17,18) vorgesehen. Besonders vorteilhaft sind die Kompaktheit der Vorrichtung und der geringe Energiebedarf. Die Spritzblasvorrichtung kann in Verbindung mit üblichen Spritzgießmaschinen verwendet werden.

FIG.1

EP 0 158 146 A2

## Spritzblasvorrichtung

Die Erfindung betrifft eine Spritzblasvorrichtung zum Herstellen von Hohlkörpern aus Kunststoff, mit einem Formdorne tragenden Dornträger und mit zwei Spritzgießformen sowie zwei Blasformen, die an einem Werkzeugträger angeordnet sind und in welche die Formdorne zum Spritzgießen von Vorformlingen und zum anschließenden Blasformen der Hohlkörper eintauchbar sind, wobei die Formdorne um eine parallel zu ihrer Längsachse verlaufende Achse schwenkbar sind.

Bei einer bekannten derartigen Spritzblasvorrichtung (DE-OS 20 06 258) sind mehrere Spritzgießformen und Blasformen entlang eines Kreises an einem Formträger befestigt, während die zugehörigen Formdorne an einem in der Art eines Karussells ausgebildeten Dornträger befestigt sind. Diese bekannte Spritzblasvorrichtung erfordert viel Platz, da die Spritzgießformen und die Blasformen mit gegenseitigen Abständen angeordnet sein müssen, damit sie sich thermisch nicht beeinflussen. Während die Spritzgießformen beheizbar sein müssen, erfordern die Blasformen eine Kühlung, wobei jede der Formen separat beheizt bzw. gekühlt werden muß. Zwischen zwei Spritzgießformen ist jeweils eine Blasform angeordnet. Durch die wechselweise Anordnung der Formen ergeben sich Wärmedehnungsprobleme und hohe Energiekosten. Ferner sind die Herstellungskosten für die bekannte Spritzblasvorrichtung wegen des komplizierten Aufbaus und der großen Abmessungen sehr hoch.

Es ist ferner eine Spritzblasvorrichtung bekannt (DE-OS 16 29 206), bei der ein Verformling in einem ersten Verfahrensschritt in einer Spritzgießform an einem Formdorn gebildet wird, durch den der Verformling in einem zweiten Verfahrensschritt in einer einstückigen Blasform zu einem Hohlkörper blasgeformt. Der Formdorn führt bei dieser Spritzblasvorrichtung stets eine axiale translatorische Bewegung aus, während die Blasform für den zweiten Verfahrensschritt quer in die Bewegungsbahn des Formdorenes bewegt wird. Diese Spritzblasvorrichtung läßt keinen schnellen Arbeitstakt zu, da bei jedem Arbeitstakt entweder die Blasform oder die Spritzgießform unbenutzt bleibt.

Der Erfindung liegt die Aufgabe zugrunde, eine Spritzblasvorrichtung der eingangs genannten Art dahingehend weiterzubilden, daß bei veringertem Aufwand an Heizenergie eine gedrängte räumliche Bauweise möglich ist.

Diese Aufgabe wird erfindungsgemäß dadurch gelöst, daß der Dornträger zwei Drehteller aufweist, an denen jeweils zwei der Formdorne angeordnet sind, und daß die Spritzgießformen sowie die Blasformen mit ihren Längsachsen in einer gemeinsamen Ebene liegen, wobei sich die beiden Spritzgießformen, einander dicht benachbart, zwischen den beiden Blasformen befinden.

Bei der erfindungsgemäßen Spritzblasvorrichtung liegen die Formen in einer Reihe nebeneinander, wobei die zwei Spritzgießformen in der Mitte zwischen den zwei Blasformen angeordnet sind. Dies hat den Vorteil, daß die beheizten Spritzgießformen einen einheitlich beheizbaren Komplex bilden, wodurch die Wärmeausdehnungsprobleme sowie die Abstrahlungs- und die Wärmeleitungsverluste reduziert werden. Sämtliche Formen sind mit ihren Achsen in einer gemeinsamen Ebene angeordnet, d.h. die Formen liegen in einer Reihe, wobei die kalten Blasformen außen und die beheizten Spritzgießformen innen angeordnet sind. Dadurch werden die Wärmeausdehnungsprobleme und Wärmeverluste verringert. Außerdem wird durch die gemeinsame Heizung erreicht, daß die beiden Spritzgießformen exakt auf der gleichen Temperatur gehalten werden. Die Blasformen, die sich an den Außenseiten befinden, geben durch Abstrahlung und Konvektion Wärme an die Umgebungsluft ab und werden daher von der Umgebungsluft gekühlt.

An dem Dornträger sind zwei Drehteller gelagert, von denen jeder zwei Formdorne trägt. Die beiden in der Vierergruppe innen angeordneten Formdorne werden in die Spritzformen eingeschoben und die beiden äußeren Formdorne in die Blasformen. Die beiden Drehteller können synchron zueinander um ihre jeweilige Achse gedreht werden. Die Formdorne an jedem der beiden Drehteller werden abwechselnd als Spritzdorne und als Blasdorne benutzt. Die Spritzblasvorrichtung ist imstande in einem schnellen Arbeitstakt zu arbeiten und eine hohe Stückzahl pro Zeiteinheit herzustellen.

Von besonderem Vorteil ist ferner, daß jeweils einstückige Blasformen, die ungeteilt sind, verwendet werden können. Die ungeteilten Blasformen ermöglichen eine wirksamere Kühlung des Blasartikels und dadurch eine schnellere und billigere Produktion.

Im folgenden wird unter Bezugnahme auf die Zeichnungen ein bevorzugtes Ausführungsbeispiel des Gegenstandes der Erfindung erläutert.

Es zeigen:

Fig. 1     einen schematischen Längsschnitt der Spritzblasvorrichtung mit einem Dornträger und einem Formträger,

Fig. 2     eine Ansicht des Dornträgers gemäß Fig. 1 aus der Richtung II-II in ganz aus dem Formträger herausgefahrenem Zustand und

Fig. 3     eine Ansicht des Formträgers aus der Richtung III-III nach Fig. 1 in ausgefahrenem Zustand.

Die Spritzblasvorrichtung weist einen Formträger 10 und einen Dornträger 11 auf. Der Formträger 10 besteht aus einem Block, welcher Ausnehmungen zur Aufnahme von zwei Spritzgießformen 12 und 13 sowie von zwei Blasformen 14 und 15 aufweist. Der Dornträger 11 ist in Richtung eines Doppelpfeiles 16 relativ zu dem Formträger 10 verschiebbar. An der dem Formträger 10 zugewandten Seite weist der Dornträger 11 zwei Drehteller 17 und 18 auf, von denen je zwei Formdorne 19 bzw. 20 abstehen. Alle vier Formdorne 19 und 20 sind gleich ausgebildet. Sie weisen einen ersten Formabschnitt 21 für den Hals eines herzustellenden Behälters 25 sowie einen im wesentlichen zylindrischen Formabschnitt 22 als Kern für den Spritzgießvorgang auf. Im Bereich des Formabschnitts 22 sind Luftaustrittsöffnungen 23 angeordnet, aus denen Blasluft in das Behälterinnere hinein austritt.

An dem Formträger 10 sind zwei Führungsschienen 42 und 43 angebracht, in denen zwei Formbacken 24 zur Formung der Halspartie des Behälters 25 verschiebbar geführt sind. Die Formbacken 24 haben halbkreisförmige Ausnehmungen 26 für das Formen der Außenseite der Halspartie des Behälters 25.

Ähnliche Formbacken 27 sind an dem Dornträger 11 verschiebbar. Jede der Formbacken 27 weist zwei Formkanalhälften 30 und 31 auf, die bei geschlossenen Formbacken 27 einen Formkanal zur Bildung der Außenkontur des Behälterhalses bilden. Die Formbacken 27, die an dem Dornträger 11 verschiebbar angebracht sind, bilden die Halsformungsbereiche für je einen in den Spritzgießformen 12 und 13 herzustellenden Vorformling 25'.

Die Spritzgießformen 12 und 13 sind einstückig ausgebildet und weisen eine Bohrung zur Bildung des Vorformlings 25' auf. In die Bohrung führt ein Kanal des Heißkanalsystems 33 hinein. Dieses Heißkanalsystem 33 befindet sich in einem geheizten Heißeinlaufblock 34, der mit beiden Spritzgießformen 12,13 gleichermaßen Kontakt hat. Statt des abgebildeten Systems können auch marktübliche Heißkanalsysteme eingesetzt werden. Die Spritzgießformen 12,13 bilden somit zusammen mit dem Heißeinlaufblock 34 einen beheizten Komplex im Innern des Formträgers 10.

Die Formdorne 19 und 20 sind jeweils entlang eines gemeinsamen Durchmessers des Drehtellers 17 bzw. 18 angeordnet, d.h. sie liegen einander, bezogen auf die
Drehachse, um 180° gegenüber.

Durch den Block des Dornträgers 11 führt eine Blasluftleitung 44 bis zu jedem Drehteller 17,18. Durch die
Drehteller 17 und 18 hindurch führen nicht dargestellte
Bohrungen, die das hohle Innere der Formdorne 19 und 20
mit der Blasluftleitung 44 verbinden, wenn der entsprechende Formdorn 19 bzw. 20 sich im Innern der Blasform
14 bzw. 15 befindet. Dann strömt die Blasluft von der
Blasluftleitung 44 in den Drehteller 17 bzw. 18 und von
dort in das Innere des Formdornes 19 bzw. 20, um an den
Luftaustrittsöffnungen 23 auszutreten.

Die Drehteller 17,18 sind mit Achsen 35 in dem Block
des Dornträgers 11 gelagert. An der Rückseite dieses
Blocks ist eine Zahnstange 36 verschiebbar gelagert,
deren Zähne in zwei Zahnräder 37 eingreifen, die an den
Enden der Achsen 35 angebracht sind. Bei einer Verschiebung der Zahnstange 36 werden somit beide Drehteller 17,18 synchron zueinander gedreht.

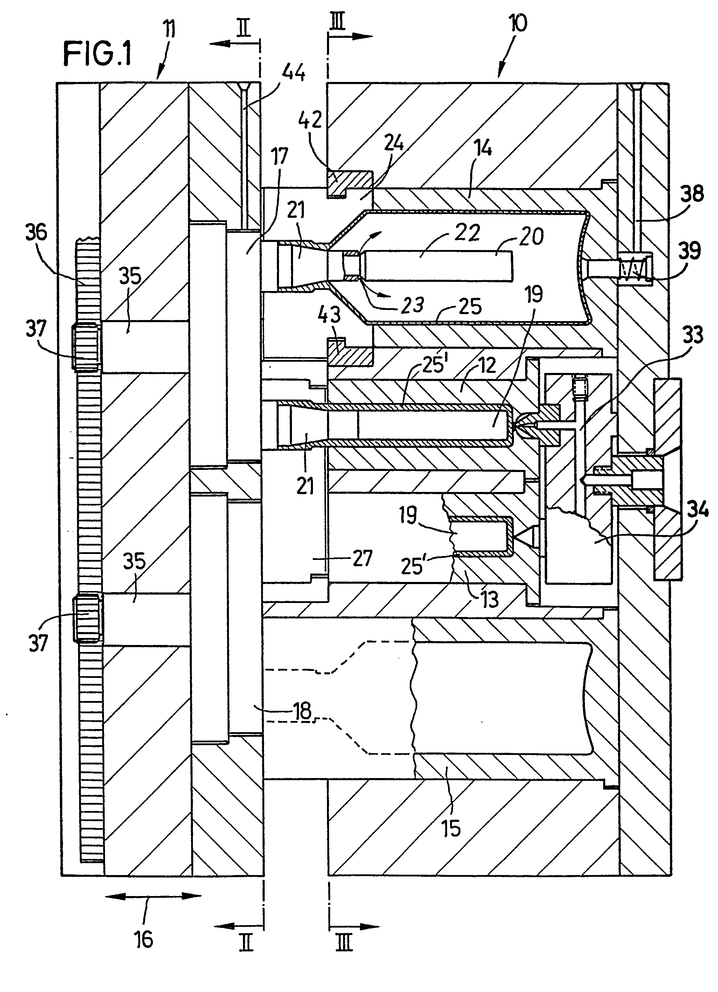

Die Spritzblasvorrichtung arbeitet wie folgt: In dem in
Fig. 1 dargestellten Zustand wird in die Spritzgießformen 12 und 13 plastifizierter Kunststoff injiziert,
während die beiden mittleren Formdorne 19, die verschiedenen Drehtellern 17 und 18 angehören, sich in den
beiden Spritzgießformen 12 bzw. 13 befinden. Anschließend wird der Dornträger 11 nach links bewegt,
wodurch sämtliche Formdorne 19 bzw. 20 aus ihren entsprechenden Formen 12,13,14 bzw. 15 herausgezogen wer-

0158146

den. An den beiden mittleren Formdornen 19 haftet je einer der Vorformlinge 25' an.

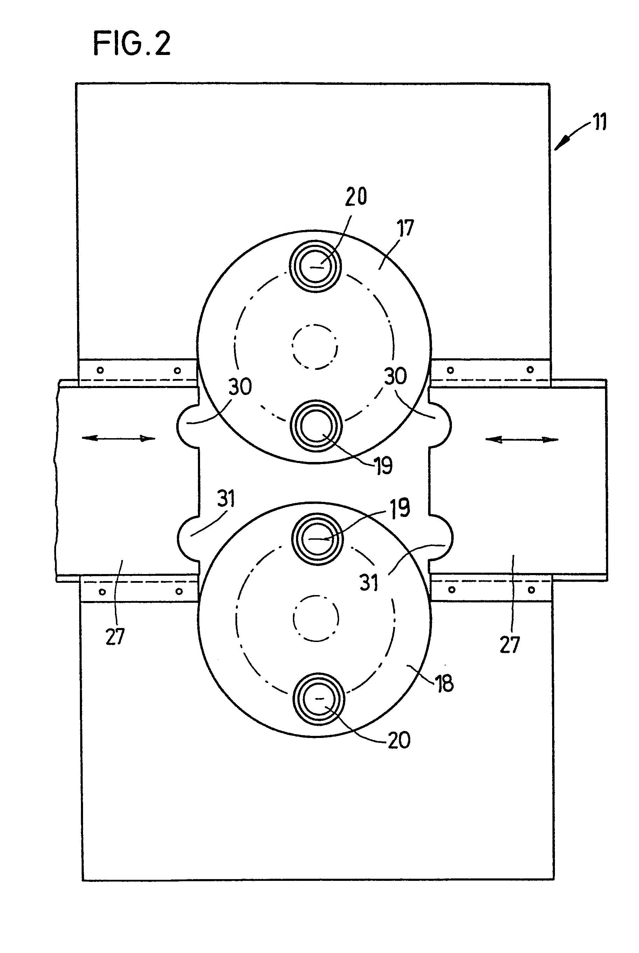

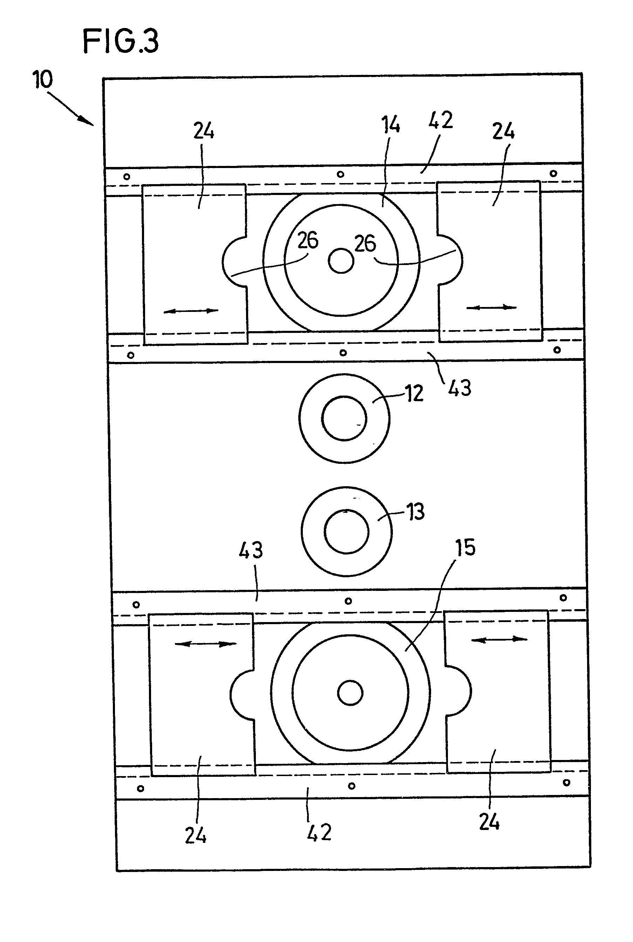

Nun werden die Formbacken 24 der beiden Blasformen 14 und 15 (Fig. 3) und die Formbacken 27 der beiden Spritzgießformen 12 und 13 auseinandergefahren (Fig. 2). Die Drehteller 17 werden in gleichem Drehsinn zueinander um 180° verdreht, wodurch die beiden Vorformlinge 25' vor die Blasform 14 bzw. 15 geschwenkt werden. In gleicher Weise werden die zunächst äußeren Formdorne 20 vor die Öffnung der Blasform 14 bzw. 15 geschwenkt. Dann wird der Dornträger 11 wieder in Richtung auf den Formträger 10 bewegt, wobei die Formdorne 19 und 20 in die betreffenden Spritzgießformen 12,13 bzw. Blasformen 14,15 eintauchen. Anschließend werden die Formbacken 24 und 27 aufeinander zu bewegt, so daß sie sich um den Formabschnitt 21 herum schließen und die Halspartie entsteht.

Durch die aus den Blasluftleitung 44 austretende Blasluft wird der Behälter 25 aufgeweitet und in seine endgültige Form gebracht, während gleichzeitig die nächsten Vorformlinge 25' hergestellt werden.

Die Spritzblasvorrichtung wird nun geöffnet. Hierbei bleiben alle Formbacken 24 und 27 zunächst geschlossen. Die fertigen Behälter 25 werden also in der Blasform 14 bzw. 15 festgehalten, während die Vorformlinge 25' auf dem zugehörigen Formdorn verbleiben und mit diesem aus der Spritzgießform 12 bzw. 13 herausgezogen werden.

Nun werden die Formbacken 24 und 27 geöffnet und die Behälter 25 durch Druckluft, die durch einen Kanal 38 zugeführt wird, mittels einer Auswerfereinrichtung 39 aus der Blasform 14 bzw. 15 herausgedrückt. Die Auswerfereinrichtung, deren Steuerung nicht dargestellt ist, ist mit 39 bezeichnet. Wenn der Auswurfvorgang beendet ist, wird der soeben gespritzte Vorformling durch Drehung des Drehtellers in die Blasposition gebracht. Ist diese Position erreicht, bewegt sich der Dornträger 11 wieder in Richtung auf den Formträger 10 zu und die Formdorne tauchen in die entsprechenden Spritz- und Blasformen ein. Dann bewegen sich die Formbacken 24 und 27 wieder aufeinander zu. Wenn diese Bewegungsabläufe abgeschlossen sind, beginnt wiederum in der Blasform der Blasvorgang und gleichzeitig in der Spritzgießform der Spritzvorgang.

Die erfindungsgemäße Spritzblasvorrichtung, bei der in der Arbeitsstellung sämtliche vier Formdorne in einer gemeinsamen Ebene angeordnet sind, hat den Vorteil, daß eine einzige konzentrierte Wärmezone im Mittelbereich des ersten Formträgers 10 vorhanden ist. Das Heißkanalsystem 33 hat eine geringe Ausdehnung und in der Spritzzone kann mit hohen Drücken gearbeitet werden. Ein weiterer Vorteil besteht darin, daß die Drehteller 17 und 18 kleine Durchmesser haben und daß die gesamte Vorrichtung kompakt und mit geringen Abmessungen hergestellt werden und auf relativ kleinere Spritzgießmaschinen betrieben werden kann.

- 9 -

ANSPRÜCHE

1.  Spritzblasvorrichtung zum Herstellen von Hohlkörpern aus Kunststoff, mit einem Formdorne tragenden Dornträger und mit zwei Spritzgießformen
    sowie zwei Blasformen, die an einem Werkzeugträger
    angeordnet sind und in welche die Formdorne zum
    Spritzgießen von Vorformlingen und zum anschließenden Blasformen der Hohlkörper eintauchbar
    sind, wobei die Formdorne um eine parallel zu
    ihrer Längsachse verlaufende Achse schwenkbar
    sind,
    d a d u r c h   g e k e n n z e i c h n e t ,
    daß der Dornträger (11) zwei Drehteller (17 und
    18) aufweist, an denen jeweils zwei der Formdorne
    (19 und 20) angeordnet sind, und daß die Spritzgießformen (12 und 13) sowie die Blasformen (14
    und 15) mit ihren Längsachsen in einer gemeinsamen
    Ebene liegen, wobei sich die beiden Spritzgießformen (12 und 13), einander dicht benachbart,
    zwischen den beiden Blasformen (14 und 15) befinden.

2.  Spritzblasvorrichtung nach Anspruch 1, dadurch
    gekennzeichnet, daß vor jeder der Blasformen (14
    bzw. 15) zwei senkrecht zu den Blasformlängsachsen
    bewegbare Formbacken (24) an dem Formträger (10)
    verschiebbar geführt sind und daß vor den Spritzgießformen (12,13) zwei senkrecht zu den Formdornlängsachsen bewegbare Formbacken (27) an dem
    Dornträger (11) verschiebbar geführt sind.

3. Spritzblasvorrichtung nach einem der Ansprüche 1 oder 2, dadurch gekennzeichnet, daß die Spritzgießformen (12 und 13) einen gemeinsamen Heißeinlaufblock (34) mit einem Heißkanalsystem (33) aufweisen.

4. Spritzblasvorrichtung nach einem der Ansprüche 1 bis 3, dadurch gekennzeichnet, daß die Blasformen (14,15) jeweils ungeteilt ausgebildet sind.

FIG.1

-1/3-

0158146

## FIG.2

0158146

# FIG.3